# EUROPÄISCHE PATENTANMELDUNG

(11) **EP 1 405 742 A1**
(43) Veröffentlichungstag der Anmeldung: **07.04.2004**
(21) Anmeldenummer: 02102403.9
(22) Anmeldetag: 01.10.2002
(51) Int. Cl.: B60H 1/00, B60H 1/24

(54) **Verfahren zur Beheizung von Scheiben von Kraftfahrzeugen und Heizungssystem zur Durchführung dieses Verfahrens**

(71) Anmelder: Ford Global Technologies, Inc., A subsidiary of Ford Motor Company, Dearborn, Michigan 48126 (US)
(72) Erfinder: Heinz, Uwe, 41812 Erkelenz (DE)
(74) Vertreter: Drömer, Hans-Carsten, Dr.-Ing.

(57) **Zusammenfassung**

Die Erfindung betrifft ein Verfahren zur Beheizung von Scheiben (2,3,4,5) and Kraftfahrzeugen (1 ), bei dem alle Scheiben (2,3,4,5) beheizbar sind sowie ein Heizungssystem zur Durchführung dieses Verfahrens.

## Beschreibung

Die Erfindung betrifft ein Verfahren zur Beheizung von Scheiben von Kraftfahrzeugen sowie ein Heizungssystem zur Durchführung dieses Verfahrens.

Die Klimatisierung des Innenraumes eines Kraftfahrzeuges stellt viele verschiedenen Anforderungen an das Heizungs-Klima-Lüftungssystem. Im Sommer gilt es die Innenraumtemperatur auf ein komfortables Niveau zu kühlen, während im Winter ein schnelles Erwärmen und stabiles Halten der erreichten Temperatur des Innenraumes sehr zum Wohlbefinden der Insassen beiträgt. Eines der Probleme ergibt sich allerdings häufig dadurch, daß die in der Luft enthaltene Feuchtigkeit an den Scheiben kondensieren kann und so einen relativ undurchsichtigen Film auf den Scheiben, sogenannte beschlagene Scheiben, bildet. Bei entsprechenden ungünstigen Bedingungen gefriert die Feuchtigkeit sogar an den Scheiben. Dieser Kondensationsfilm oder die Eisschicht behindert die Sicht des Fahrers und sollte daher möglichst vermieden werden. Stand der Technik ist es dabei, die Temperatur der Scheiben zu erhöhen und/oder die Luft zu entfeuchten.

Zur Temperaturerhöhung wird üblicherweise erwärmte Luft insbesondere an die Front- und die vorderen Seitenscheiben geleitet. Diese Maßnahme zur Beschlagvermeidung wirkt sich üblicherweise negativ auf den Innenraumkomfort aus.
Es werden auch elektrisch beheizbare Scheiben verwendet, bei denen stromdurchflossene dünne Widerstandsdrähte für die nötige Heizleistung zur Erwärmung der Scheibenfläche sorgen. Alle Scheiben eines Kraftfahrzeuges elektrisch zu beheizen scheitert in der Regel an der zu großen benötigten elektrischen Leistung, so daß üblicherweise nur die Heckscheibe, selten auch die Frontscheibe, elektrisch beheizt werden. Die Einschaltdauer der elektrischen Heizung ist deswegen häufig begrenzt und muß meist vom Kunden vorgenommen werden.

Zur Luftentfeuchtung wird in der Regel die Klimaanlage eines Kraftfahrzeuges eingesetzt. Dabei wird die Kondensation eines großen Teiles der in der Außenluft enthaltenen Luftfeuchtigkeit am Verdampfer ausgenutzt. Je nach Bedarf wird die Luft dann von der Kraftfahrzeugheizung auf die gewünschte Temperatur nachgeheizt.

Nachteilig ist es allerdings dabei, daß die erwärmte Luft generell sehr trocken ist, was wiederum zur Beeinträchtigung des Komforts für die Insassen führt. Außerdem tritt bei der Entfeuchtung der Luft mittels Klimaanlage das Problem auf, daß die Klimaanlage systembedingt nur über 0°C in Betrieb sein kann.

Bekannt ist es, auch aus der Wohnraumklimatisierung, daß der Mensch sich nur in einem bestimmten Temperaturbereich und in einem bestimmten relativen Luftfeuchtigkeitsbereich, dem sogenannten Behaglichkeitsfenster, komfortabel fühlt. Dies gilt auch für die Insassen von Kraftfahrzeugen. Allerdings ist hier die Luft häufig zu trocken, im Winter durch den ohnehin niedrigen Feuchtigkeitsgehalt der Außenluft und der Notwendigkeit der Erwärmung der Luft und im Sommer dadurch, daß die gebräuchlichen Klimaanlagen einen großen Teil der Luftfeuchtigkeit auskondensieren. Es ist daher wünschenswert für die Passagiere eines Kraftfahrzeuges eine Feuchteregelung für den Innenraum zu installieren. Es ist dabei gebräuchlich zur Erhöhung der Luftfeuchtigkeit im Innenraum die Umluftklappe zu benutzen/schließen. So eine Feuchteregelung erhöht allerdings die Beschlagneigung der Scheiben bei niedrigen Außentemperaturen erheblich. Beschlagfreiheit unter möglichst allen Bedingungen zu gewährleisten und gleichzeitig die Innenraumtemperatur und -feuchtigkeit im Behaglichkeitsfenster zu halten stehen also im Widerspruch.

Beispielhaft für den Stand der Technik zur Vermeidung des Beschlagens von Scheiben von Kraftfahrzeugen seien hier die US 6,115,061, die US 6,112,807 und die DE 195 40 566 genannt.

Bei der US 6,115,061 wird eine bekannte Heizungs-, Belüftungs- und Klimaanlage automatisch so gesteuert, daß ein Beschlagen der Scheiben vermieden wird. Zur Steuerung werden verschiedene Parameter herangezogen, wie Außen- und Innentemperatur, Vorhandensein von Regen, Fahrzeuggeschwindigkeit, etc. Aus diesen Parametern werden z. T. Parameter abgeleitet wie z. B. Beschlagneigung und relative Luftfeuchte. Entsprechend verschiedener Steuerungsprogramme werden dann das Gebläse, die Lüftungsklappen und/oder der Kältemittelkompressor aktiviert.

Bei der US 6,112,807 findet zusätzlich noch ein Feuchtesensor Verwendung, außerdem wird berücksichtigt, daß ein Klimaanlagenverdampfer vereisen kann und so keine Frischluft mehr in den Innenraum gelangen kann.

Die DE 195 40 566 verwendet neben den bekannten Heizungs- und Klimaanlagenbauteilen und Temperatur- und Feuchtesensoren Fuzzy-Regeln zur Ermittlung der Beschlagwahrscheinlichkeit und Regelung der Heizung-, Belüftungs- und Klimaanlage.

Die genannten Verfahren weisen jedoch den Nachteil auf, daß sie entweder nur die Front- und vorderen Seitenscheiben entfeuchten oder aber unter 0°C Außentemperatur nicht mehr in Betrieb genommen werden können. Außerdem ist eine Feuchte/UmJuftregetung zur Schaffung eines Innenraumklimas im Behaglichkeitsfenster nicht oder nur sehr eingeschränkt durchführbar.

Vor diesem Hintergrund war es Aufgabe der vorliegenden Erfindung, ein Verfahren zu entwickeln, welches durch individuelles, variables und bedarfsgerechtes Beheizen aller Scheiben eines Kraftfahrzeuges ein Beschlagen der genannten Scheiben, insbesondere auch bei Vorhandensein einer Feuchteregelung, zuverlässig verhindert und eine Vorrichtung zur Durchführung dieses Verfahrens bereitzustellen.

Diese Aufgabe wird durch ein Verfahren mit den Merkmalen des Anspruchs 1 sowie durch eine Vorrichtung mit den Merkmalen des Anspruchs 7 gelöst.

Vorteilhafte Ausgestaltungen sind in den Unteransprüchen enthalten.

Das erfindungsgemäße Verfahren zur bedarfsgerechten Beheizung von Scheiben an Kraftfahrzeugen zeichnet sich dadurch aus, daß alle Scheiben eines Kraftfahrzeuges beheizbar sind. Die Heizquelle ist dabei beliebig, bevorzugt werden jedoch elektrisch beheizbare Scheiben. Die Beheizung aller Scheiben hat den Vorteil, daß bei allen Betriebszuständen eines Kraftfahrzeuges, insbesondere bei Einsatz einer Feuchteregelung, zuverlässig die Scheiben beschlagfrei gehalten werden.

In einer bevorzugten Ausgestaltung der Erfindung wird die Heizleistung der elektrischen Heizung regelbar ausgeführt. Dabei wird der jeweiligen Scheibe nur soviel elektrische Energie zugeführt, wie tatsächlich zur Beschlagfreihaltung benötigt wird. (Für eine Warmluftheizung läßt sich dies z. B. mit variablen Klappen und/oder regelbarem Gebläse ausführen.) Bei elektrisch beheizten Scheiben hat dies gegenüber den heutigen Front- und Heckscheibenheizungen den Vorteil, daß nur soviel elektrische Leistung benötigt wird, wie tatsächlich zur Beschlagfreihaltung erforderlich ist. Dies senkt den Gesamtbedarf an elektrischer Energie zur Beschlagfreihaltung ganz erheblich.

Gemäß einer Weiterbildung des Verfahrens wird zur Bestimmung und Regelung der Heizleistung die Luftfeuchtigkeit im Innenraum eines Kraftfahrzeuges herangezogen (Nutzung des Feuchtesensors einer Feuchteregelung). Ein oder mehrere Feuchtesensoren messen dabei die Luftfeuchtigkeit im Innenraum des Kraftfahrzeugs. Daraus und anhand von eingehenden Sensorsignalen lassen sich Rückschlüsse auf die Beschlagneigung der Scheiben ziehen und die Heizung kann dementsprechend geregelt werden. Denkbar ist auch eine Variante bei der die Feuchtesensoren in eine elektrische Heizung integriert sind (beschrieben in der DE 44 26 736). So lassen sich alle Scheiben individuell bedarfsgerecht beheizen und der Stromverbrauch wird so niedrig wie möglich gehalten.

Bei einer anderen Weiterbildung der Erfindung wird die benötigte Heizleistung für jede Scheibe nicht direkt bestimmt. Vielmehr werden Kennfelder herangezogen, die z. B. die Heizleistung für jede Scheibe in Abhängigkeit von Außen- und Innenraumtemperatur aber auch Fahrgeschwindigkeit, Sonnenstand und Insassenanzahl festlegen. Die Einbeziehung eines oder mehrerer Innenraumfeuchtesensoren ist überwiegend sinnvoll.

Bei einer bevorzugten Ausbildung der Erfindung werden die Kennfelder zuvor in Fahrzeugversuchen mittels einer geeigneten Testroutine (fogging resistance evaluation) bestimmt. Da die Beschlagneigung für jedes Fahrzeug und für jede Scheibe unterschiedlich ist, ist es sinnvoll, diese z. B. in Windkanalversuchen zu bestimmen. Dies trägt z. B. der unterschiedlichen Durchströmung des Innenraums bei unterschiedlichen Fahrzeugen und/oder unterschiedlichen Fahrbedingungen Rechnung. So können Kennfelder bestimmt werden, die z. B. ausgehend von der Außentemperatur, Sonnenlast und Fahrgeschwindigkeit sowie der Innenraumtemperatur und -feuchte die nötige Heizleistung für jede Scheibe vorgeben.

Denkbar ist auch eine Bestimmung der Scheibenoberflächentemperatur mittels CAE Simulation oder per Widerstandsmessung der vorhandenen Heizdrähte. So können dann die Scheiben individuell und bedarfsgerecht bestromt und erwärmt werden.
Für alle Varianten sind aber die genannten Sensorsignale und der oder die im Innenraum installierten Feuchtesensoren notwendig, um situationsgerecht die Erwärmung der Scheiben einzuleiten.

Die individuelle, variable und bedarfsgerechte elektrische Beheizung der Scheiben gestattet also die Betreibung einer Umluftregelung zur Erhaltung des Behaglichkeitsfensters, auch wenn diese im Konflikt mit Scheibenbeschlag steht. Zudem sind weder Zugluft noch eine Erwärmung jenseits des Wohlbefindens notwendig. Die Erfindung bedient sich bestehender oder zukünftiger automatischer Klimasysteme, die feuchtegeregelte Klimakompressorregelungen zwecks Energieersparnis einsetzen. Fahrzeuge müssen nur um die Scheibenheizung und den notwendigen Regelalgorithmus erweitert werden.

Die Erfindung betrifft weiterhin ein Heizungssystem für ein Kraftfahrzeug, welches zur Durchführung der genannten Verfahren geeignet ist. Dabei kann z. B. ein vorhandenes automatisches oder halbautomatisches Heizungssystem um die zur Durchführung des Verfahrens nötigen Luftkanäle erweitert werden. Die üblicherweise schon vorhandene Regelung wird dann z. B. durch die ermittelten Kennfelder ergänzt. Auch eine Kombination von Warmluft und elektrischer Heizung bieten sich hier an.

Im Folgenden wird die Erfindung anhand der einzigen Figur beispielhaft näher erläutert. Es zeigt:

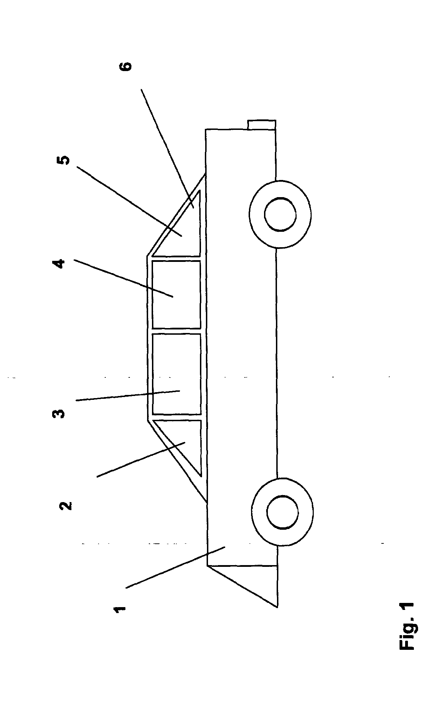

- Fig. 1: ein schematisch dargestelltes Kraftfahrzeug mit schematisch dargestellten Scheiben

Figur 1 zeigt schematisch ein Kraftfahrzeug 1 in der Seitenansicht mit vier Seite n-scheiben 2,3,4,5. Nicht dargestellt sind die Front- und Heckscheibe. Während üblicherweise nur die Front- und Heckscheibe elektrisch beheizbar, versorgt die Fahrzeugheizung die Seitenscheiben 2,3 in der Regel mit Warmluft. Erfindungsgemäß werden nun bei Bedarf alle Scheiben 2,3,4,5 des Kraftfahrzeuges 1 beheizt, um ein Beschlagen der Scheiben 2,3,4,5 und der Front- und Heckscheibe zu verhindern.

Position 6 zeigt den bevorzugten Einbauort für den Feuchtesensor bei den erfindungsgemäßen Ausführungen des Verfahrens unter Benutzung eines Feuchtesensors. Dieser Einbauort sollte in der Nähe der Abluftöffnungen liegen um den tatsächlichen Feuchtegehalt der Innenraumluft möglichst gut zu bestimmen, da sich die Luft beim Durchströmen des Innenraumes in der Regel mit Feuchtigkeit anreichert.

## Patentansprüche

1. Verfahren zur Beheizung von Scheiben (2,3,4,5) von Kraftfahrzeugen (1),
**dadurch gekennzeichnet, daß**
das alle Scheiben (2,3,4,5) beheizbar sind.

2. Verfahren nach Anspruch 1,
**dadurch gekennzeichnet, daß**
die Heizleistung der Scheibenheizung regelbar ist.

3. Verfahren nach Anspruch 1 oder 2,
**dadurch gekennzeichnet, daß**
die Heizleistung der Scheibenheizung für jede Scheibe (2,3,4,5) individuell bedarfsgerecht regelbar ist.

4. Verfahren nach Anspruch 2 oder 3,
**dadurch gekennzeichnet, daß**
das zur Ermittlung der Heizleistung die Luftfeuchtigkeit im Innenraum herangezogen wird.

5. Verfahren nach Anspruch 3 oder 4,
**dadurch gekennzeichnet, daß**
das zur Ermittlung der Heizleistung Kennfelder oder Berechnungen herangezogen werden.

6. Verfahren nach Anspruch 5,
**dadurch gekennzeichnet, daß**
das diese Kennfelder in Fahrzeugversuchen bestimmt werden.

7. Heizsystem zur Beheizung von Scheiben (2,3,4,5) von Kraftfahrzeugen (1),
**dadurch gekennzeichnet, daß**
dieses zur Ausführung eines Verfahrens nach einem der Ansprüche 1 bis 6 ausgebildet ist.
